Europäisches Patentamt

European Patent Office

Office européen des brevets

(19)

(11) Numéro de publication: **0 213 988**
**A1**

# (12) DEMANDE DE BREVET EUROPEEN

(21) Numéro de dépôt: **86401567.2**

(22) Date de dépôt: **15.07.86**

(51) Int. Cl.⁴: **G 02 B 6/28**

(30) Priorité: **06.08.85 FR 8511998**

(43) Date de publication de la demande:
**11.03.87 Bulletin 87/11**

(84) Etats contractants désignés: **DE GB IT NL**

(71) Demandeur: **SAT Société Anonyme de Télécommunications**
**41, rue Cantagrel**
**F-75631 Paris Cedex 13 (FR)**

**SOCIETE INDUSTRIELLE DE LIAISONS ELECTRIQUES (SILEC)**
**64 bis, rue de Monceau**
**F-75008 Paris (FR)**

(72) Inventeur: **Calevo, Robert**
**41, rue Cantagrel**
**F-75631 Paris Cedex 13 (FR)**

**Enderle, Louis**
**41, rue Cantagrel**
**F-75631 Paris Cedex 13 (FR)**

(74) Mandataire: **Cerez-Busnel, Béatrice**
**Société Anonyme de Télécommunications 41, rue Cantagrel**
**F-75631 Paris Cedex 13 (FR)**

(54) Procédé de localisation d'une fibre optique et son application à la réalisation de coupleurs optiques.

(57) L'invention consiste essentiellement à localiser le diamètre du guide (11) des fibres optiques (1) par un chauffage approprié du revêtement de protection (12) au moyen d'un palpeur (3). La profondeur ($X_1$) de pénétration du palpeur (3) dans la fibre (1) détermine la position du guide (11) de la fibre (1).

Application à la réalisation de multiplexeurs démultiplexeurs, de coupleurs et de tout autre équipement de raccordement.

Fig. 1.a.

EP 0 213 988 A1

**Description**

Procédé de localisation d'une fibre optique et son application à la réalisation de coupleurs optiques

La présente invention se rapporte aux techniques de transmission par fibres optiques et plus particulièrement aux techniques de raccordement ou de couplage, ou à toute autre technique nécessitant une localisation de fibre optique.

On sait que les fibres optiques sont habituellement formées d'un guide en silice dopée, ce guide étant recouvert d'au moins un revêtement de protection en matériau synthétique dont la profondeur est plus ou moins bien définie. Ce guide comprend le coeur proprement dit de la fibre et une gaine optique (cladding en anglais).

Lorsque l'on veut rabouter ou coupler des fibres pour obtenir une efficacité maximale, il est nécessaire de parfaitement bien localiser la position du coeur. Toutefois, un tel réglage est très difficile car on opère souvent en aveugle. Les réglages connus de l'homme de l'art supposent un équipement sophistiqué et peu précis.

La technique la plus couramment utilisée consiste à insérer les fibres dans les rainures de blocs de quartz. Le positionnement de la fibre est alors obtenu par un ajustement mécanique de ces blocs, ces blocs étant prévus à faces parallèles, le coulissement de ces blocs l'un contre l'autre permettant le positionnement des fibres comme décrit dans l'article IEEE Transactions on Quantum Electronics Vol. OE-18 n° 4 Avril 1982 pp 746-754. Toutefois, cet article ne propose aucune méthode satisfaisante permettant le contrôle de l'usinage du guide (coeur et cladding) ni de l'ajustement des tronçons de fibres après sciage, usinage, ou attaque chimique. Le brevet européen 0 121 460 ne propose pas de méthode plus satisfaisante puisque c'est la mise en butée des blocs supportant la rainure qui assure le positionnement des fibres.

L'invention préconise un procédé de localisation de la gaine optique (cladding) donc du coeur d'une fibre optique nécessitant peu de mise en oeuvre et extrêmement précis.

En effet, l'excentricité habituellement autorisée pour le coeur par rapport à la gaine (cladding) est de l'ordre de 3 μm. Il suffit donc de localiser avec précision la gaine d'une fibre pour connaître avec précision la position du coeur.

Le procédé de localisation s'applique tout particulièrement à la réalisation de coupleurs optiques dans lesquels l'usinage du coeur en son centre, pour assurer une bonne et égale distribution de l'intensité lumineuse à l'intérieur dechaque demi-fibre du coupleur , est extrêmement délicat.

Selon une première caractéristique, on approche un palpeur (3) de la fibre (1) jusqu'à une profondeur $(X_1)$ qui est la position du diamètre extérieur du guide (11) de ladite fibre, ledit palpeur étant porté à une température convenablement choisie.

Selon une seconde caractéristique, la fibre (1) est placée dans le creux d'une rainure (21) convexe,circulaire par exemple, d'un support (2) hémisphérique, et on mesure la profondeur $(X_1)$ de pénétration du palpeur (3) lorsque ce palpeur est déplacé perpendiculairement à l'axe de la fibre (1).

Selon une autre caractéristique, le palpeur (3) est biseauté à son extrêmité chauffante.

Selon une autre caractéristique, la fibre (1) est placée dans un repère (X, Y, Z) bien déterminé, tel que la profondeur $(X_1)$ de déplacement du palpeur (3) soit une abscisse $(X_1)$ mesurable, par exemple au moyen d'un capteur $(C_1)$.

Le procédé de localisation de l'invention s'applique à la réalisation de coupleurs optiques, ledit procédé consistant à usiner le guide (11) d'une fibre tangentiellement à son axe, lorsque cet axe est incurvé suivant une courbe convexe, par exemple suivant une ligne UU' d'usinage ; le procédé de réalisation de coupleurs de l'invention consiste essentiellement à localiser le diamètre extérieur (11) de la fibre (1) suivant une position $(X_1)$ au moyen du procédé de localisation précité et à usiner le guide (11) de la fibre (1) suivant une profondeur $(X_2)$ prédéterminée à partir de cette position $(X_1)$, puis à fractionner et rabouter lesdits tronçons de fibre usinée après fractionnement de façon connue en elle-même.

Selon une caractéristique supplémentaire, la profondeur $(X_2)$ est mesurée au moyen d'un capteur $(C_2)$ de position et correlée à $(X_1)$ au moyen d'un étalonnage.

Selon une autre variante, la profondeur $(X_2)$ est mesurée au moyen d'un capteur $(C_2)$ de position et correlée à $(X_1)$ par conservation du système (4) de repérage.

D'autres avantages et caractéristiques apparaîtront à la lecture de la description suivante illustrée par des dessins.

La figure 1a représente un schéma du procédé selon l'invention de localisation du diamètre extérieur d'une fibre optique avec sa représentation en coupe sur la figure 1b.

La figure 2 représente une application de cette localisation pour la réalisation de coupleurs optiques.

La figure 3 représente un schéma de l'usinage des fibres grâce à la localisation de la figure 2.

La figure 4 représente l'application du procédé de la figure 1 à la réalisation de coupleurs optiques.

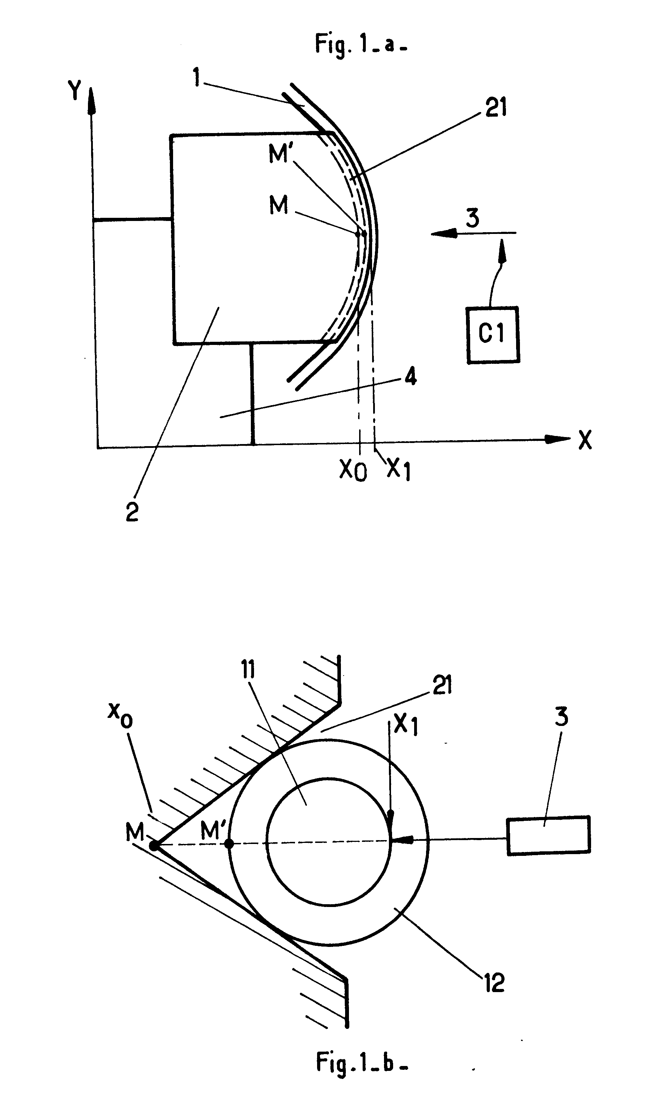

En se référant à la figure 1a, une fibre (1) est placée et collée dans la rainure (21) d'un support (2). Cette rainure (21) a pour principale caractéristique qu'elle est convexe ; elle peut par exemple présenter la forme d'un demi-cercle sur la périphérie de ce support (2). Ce support (2) peut par exemple être une hémisphère. Le creux (M) du milieu de cette rainure (21) est aisément repérable. Ce support (2) est placé de façon connue en soi dans un système (4) de repérage (X, Y, Z), par exemple au moyen d'ergots.

Le support (2) est placé dans ce système (X, Y, Z) de telle sorte que la rainure (21) soit placée dans le plan (XOY) et plus précisément que l'axe de symétrie du support (2) soit parallèle à l'axe (OX). De la sorte, le point (M) de la rainure (21) a une abscisse

($X_0$) aisément définissable et, plus précisément, un capteur ($C_1$) peut mesurer l'abscisse de position d'une fibre optique (1) placée dans cette rainure (21). Ainsi, le procédé de localisation de l'invention du diamètre extérieur du guide optique (11) [coeur + gaine (cladding)] d'une fibre optique (1) placée dans cette rainure (21), ou encore par déduction de la positon du coeur dans cette rainure (21), consiste essentiellement à déplacer un palpeur (3), suivant un axe passant par (M), parallèlement à l'axe (OX), soit orthogonalement à la fibre (1). Ce palpeur (3) est porté selon l'invention à une température convenablement choisie, par exemple de l'ordre de 200°C et est approché de la fibre (1) jusqu'à une profondeur ($X_1$) aisément repérable au moyen d'un capteur de position ($C_1$). Comme on sait que le revêtement (12) de la fibre (1) est en matériau synthétique, on sait qu'il n'oppose aucune résistance au palpeur (3) et la position ($X_1$) d'arrêt d'avancée du palpeur (3) est la position du guide (11) optique de la fibre (1) comme représenté sur la vue en coupe de la figure 1b. Une telle mesure est extrêmement précieuse car, comme une fibre (1) a un coeur en une gaine (11) de section cylindrique, lorsque le palpeur (3) est bien centré sur l'axe de symétrie de la rainure (21), c'est sur le guide (11) que le palpeur (3) s'arrête. Cette mesure ($X_1$) est enregistrée, avec précision au moyen du capteur ($C_1$).

Une telle mesure peut être extrêmement utile lors de la réalisation de mutilplexeurs lorsqu'il faut positionner avec précision des coeurs de fibres de part et d'autre d'un filtre dichroïque, par exemple pour obtenir un rendement maximal. Il suffit alors de localiser la position des guides (11) des fibres au moyen de capteurs.

Ce procédé de localisation peut encore être applicable au raboutement de fibres ou pour des épissurages ou pour le soudage de fibres.

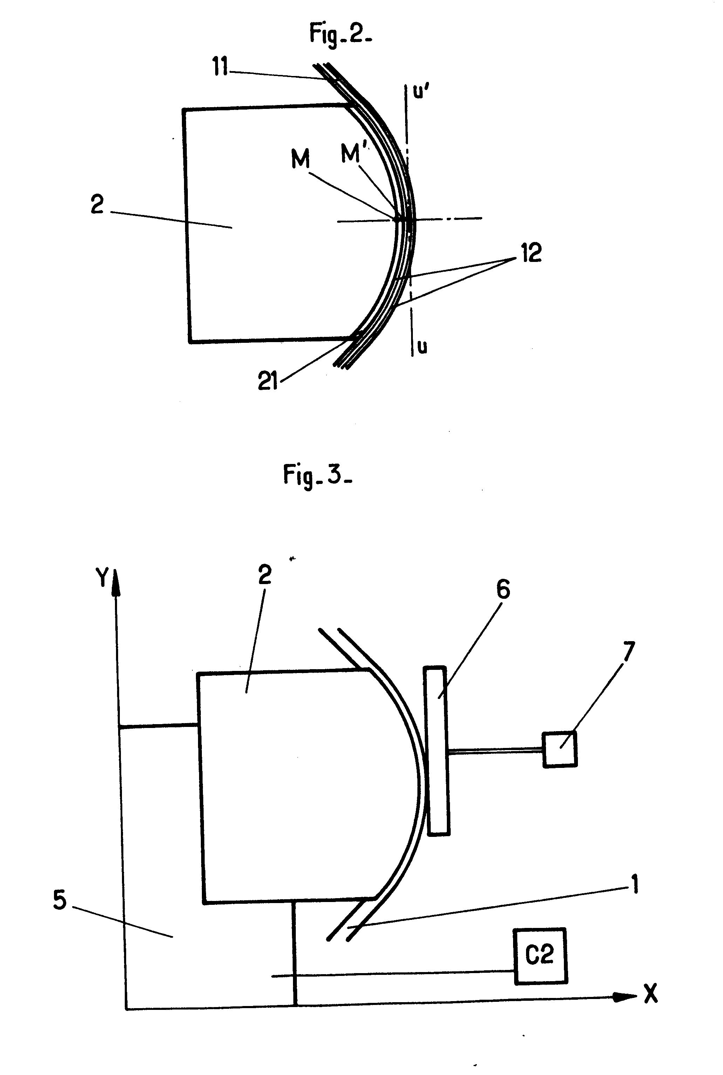

Ce procédé de l'invention est en particulier intéressant dans la réalisation de coupleurs optiques. En se référant à la figure 2, le support (2) et la fibre (1) sont représentés en coupe suivant le creux de la rainure (21) dans le plan YOX. Pour réaliser un coupleur, il est nécessaire d'usiner le coeur d'une fibre (1) suivant une ligne UU' d'usinage, tangentiellement au rayon de courbure de la fibre (1), la fibre (1) étant placée dans la rainure (21) convexe, par exemple circulaire, du support (2). Cette ligne UU', selon le couplage désiré, passe ou non par le centre (C) de la fibre (1).

Ainsi, la fibre (1) est usinée suivant une ellipse ; habituellement, dans l'art antérieur, le contrôle de l'usinage était effectué par une mesure de la longueur de l'ellipse. Une telle mesure nécessitait un transfert du montage de positionnement pour la mesure et la poursuite de l'usinage par tatonnements et contrôles de la mesure de l'ellipse. De plus, ce procédé était très long car on contrôlait le plan d'usinage de l'ellipse à chaque opération. Le procédé de localisation de la fibre (1) selon l'invention permet un usinage industriel et en série des fibres.

En se référant à la figure 3, le support (2) de la fibre (1) est placé solidaire d'un bloc (5) dont la position dans l'espace est aisément repérable en X, Y, Z. En particulier, le support (2) peut être placé de telle sorte que Y et Z soient maintenus fixes. La meule (6) est placée devant le support (2) de telle sorte qu'elle soit déplaçable suivant l'axe OX d'une grandeur appropriée. Cette meule (6) est actionnée par un moteur (7) si le bloc (5) de repérage est différent du premier bloc (4), il est nécessaire d'étalonner l'usinage, par exemple pour une première fibre, par une comparaison des abscisses mesurées.

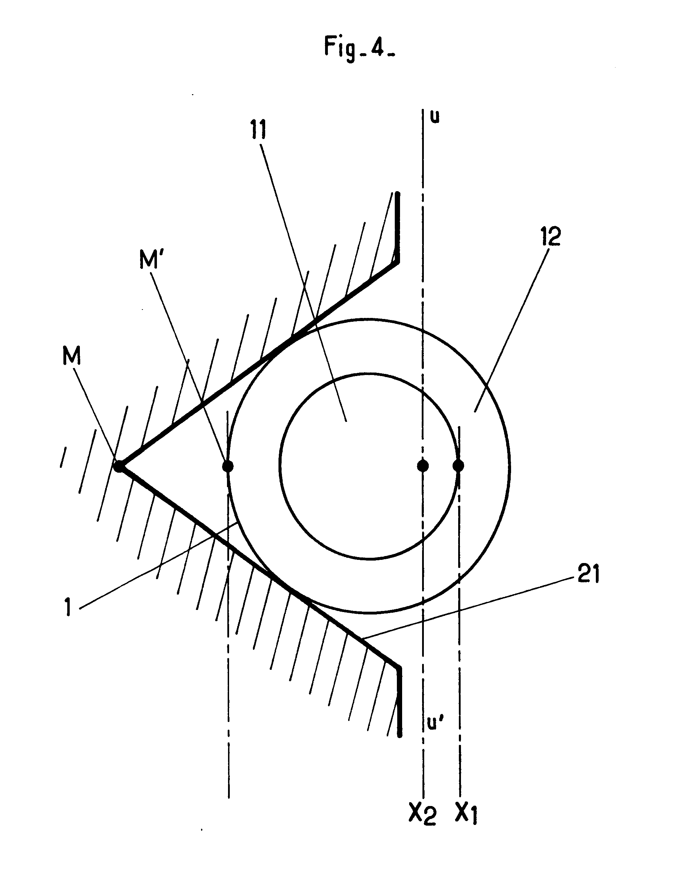

En se référant à la figure 4, lorsque l'axe de la fibre est placé orthogonalement au plan XOZ, connaissant avec certitude par étalonnage ou par conservation du système (4) de repérage l'abscisse ($X_1$) du bord externe du guide (11) suivant l'axe passant par le point (M) de la rainure (21), il suffit de programmer une profondeur ($X_2$) d'usinage pour la meule (6) pour obtenir l'ellipse de longueur convenue. Un tel réglage est applicable à un usinage en série car, si une première fibre est repérée à l'usinage au moyen d'un capteur ($C_2$), la mesure peut être reproduite pour l'usinage d'autre fibres.

On sait que, pour achever la réalisation d'un coupleur, il suffit de sectionner la fibre (1) perpendiculairement à l'axe de son guide (11) suivant le diamètre passant par (M) et de coller l'une contre l'autre les deux parties usinées de coeur puis de les rabouter à une seconde fibre, sous forme de connecteur ou de queue de cochon.

Le procédé de localisation de l'invention s'applique à tous types d'équipements optiques. Il est d'une manipulation aisée et précise.

**Revendications**

1. Procédé de localisation du guide (11) d'une fibre optique (1), procédé caractérisé par le fait qu'on approche un palpeur (3) porté à une température convenablement choisie de ladite fibre (1), jusqu'à une profondeur ($X_1$) qui est la position du guide (11) de ladite fibre, ledit guide (11) étant formé du coeur et de la gaine en silice.

2. Procédé de localisation selon la revendication 1 caractérisé par le fait que la fibre (1) est placée dans le creux d'une rainure (21) convexe, par exemple circulaire d'un support (2), et en ce qu'on mesure la profondeur ($X_1$) de pénétration du palpeur (3) lorsque ce palpeur (3) est déplacé perpendiculairement à l'axe de la fibre (1).

3. Procédé de localisation selon l'une des revendications 1 ou 2 caractérisé par le fait que le palpeur (3) est biseauté à son extrêmité chauffante.

4. Procédé de localisation selon l'une des revendications 1 à 3 caractérisé par le fait que la fibre est placée dans un repère (4) (X, Y, Z) bien déterminé tel que la profondeur ($X_1$) de déplacement du palpeur (3) soit une abscisse ($X_1$) mesurable par exemple au moyen d'un capteur ($C_1$).

5. Procédé de réalisation de coupleurs pour fibres optiques consistant à usiner le guide (11) d'une fibre optique tangentiellement à son axe lorsque cet axe est incurvé suivant une courbe convexe, ledit usinage étant effectué par exemple suivant une ligne UU', procédé caractérisé par le fait que la position ($X_1$) du guide (11) de la fibre (1) est déterminée au moyen du procédé selon l'une des revendications 1 à 4 et par le fait que le guide (11) est usiné suivant une profondeur ($X_2$) prédéterminée à partir de cette position ($X_1$), puis par le fait que la fibre (1) après usinage est fractionnée, puis par le fait que les tronçons de ladite fibre (1) sont accolés de façon connue en elle-même.

6. Procédé selon la revendication 5 caractérisé par le fait que la profondeur ($X_2$) d'usinage est mesurée au moyen d'un capteur ($C_2$) de position et corrélée à ($X_1$) au moyen d'un étalonnage.

7. Procédé selon la revendicaton 5 caractérisé par le fait que la profondeur ($X_2$) d'usinage est mesurée au moyen d'un capteur ($C_2$) de position et corrélée à ($X_1$) par conservation du système (4) de repérage.

Fig. 1 _a_

Fig. 1 _b_

Fig._2_

Fig._3_

Fig_4_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | EP-A-0 121 460 (G. LENOANE et al.)<br>* Page 5, ligne 33 - page 6, ligne 14; page 6, ligne 35 - page 7, ligne 37; figures 1,2,4A,5A * | 1,2,4, 5 | G 02 B   6/28 |
| | --- | | |
| A | IEEE TRANSACTIONS ON QUANTUM ELECTRONICS, vol. OE-18, no. 4, avril 1982, pages 746-754, New York, US; M.J.F. DIGONNET et al.:"Analysis of a tunable single mode optical fiber coupler"<br>* Partie II, "coupler description" et figure 1 * | 1,2,4, 5 | |
| | ----- | | |

**DOMAINES TECHNIQUES RECHERCHES (Int. Cl.4)**

G 02 B

Le présent rapport de recherche a été établi pour toutes les revendications

| Lieu de la recherche | Date d'achèvement de la recherche | Examinateur |
|---|---|---|
| LA HAYE | 14-11-1986 | PFAHLER R. |